# EUROPEAN PATENT APPLICATION

(11) **EP 2 793 112 A1**
(43) Date of publication of application: **22.10.2014**
(21) Application number: 11877576.6
(22) Date of filing: 15.12.2011
(51) Int. Cl.: G06F 3/048, G06F 3/0488, G06F 3/0482

(54) **PORTABLE TERMINAL**

(71) Applicant: TOYOTA JIDOSHA KABUSHIKI KAISHA, Toyota-shi, Aichi-ken, 471-8571 (JP)
(72) Inventor: SAEKI, Akira, Toyota-shi Aichi-ken 471-8571 (JP); SUZUKI, Tomoya, Toyota-shi Aichi-ken 471-8571 (JP); IWASE, Satoshi, Toyota-shi Aichi-ken 471-8571 (JP); IMANISHI, Yoichi, Toyota-shi Aichi-ken 471-8571 (JP)
(74) Representative: Kuhnen & Wacker
(86) International application number: PCT/JP2011/079088
(87) International publication number: WO 2013/088560

(57) **Abstract**

A mobile terminal device includes a main body and a touch panel, formed on the main body, on which an operating button is provided, the mobile terminal device being characterized in that when a specific condition which will cause the main body to vibrate is established, at least one of a size of the operating button on the touch panel, a size of character or symbol given on the operating button, a color or luminance of the operating button, and a response voice when the operating button is manipulated is changed.

## Description

### TECHNICAL FIELD

The present invention relates to a mobile terminal device that includes a touch panel on which an operating button is provided.

### BACKGROUND ART

Conventionally, a cellular phone has been known which includes a touch panel and which operates various equipment by transmitting thereto an operating signal that is created on the touch panel (See Patent Literature 1, for example).

### PRIOR ART DOCUMENT

### PATENT LITERATURE

Patent Literature 1: Japanese Patent Application Publication No. 2006-042123 (JP 2006-042123 A)

### SUMMARY OF THE INVENTION

### PROBLEM TO BE SOLVED BY THE INVENTION

Incidentally, on this kind of the touch panel, typically, a plurality of operating buttons are provided and a user manipulates his/her desired operating button that is selected from the plural operating buttons on the touch panel in order to realize his/her desired function. However, for example, in a case of his/her operation of the mobile terminal device while the user walks, and in a case of his/her operation of the mobile terminal device while the user is within a vehicle compartment, due to the resulting vibration (shaking) of the mobile terminal device, the user may manipulate erroneously the operating button.

Therefore, an object of the present invention is to provide a mobile terminal device which makes it possible to prevent effectively the user's erroneous manipulation of the operating button caused by the vibration of the mobile terminal device.

### MEANS FOR SOLVING THE PROBLEM

An aspect of the present invention provides a mobile terminal device which includes:
a main body; and
a touch panel which is formed on the main body and on which an operating button is provided,
the mobile terminal device being characterized in that when a specific condition which will cause the main body to vibrate is established, at least one of a size of the operating button on the touch panel, a size of character or symbol given on the operating button, a color or luminance of the operating button, and a response voice in response to a manipulation of the operating button is changed.

### EFFECTS OF THE INVENTION

According to the present invention, it is possible to provide a mobile terminal device which makes it possible to prevent effectively the user's erroneous manipulation of the operating button caused by the vibration of the mobile terminal device.

### BRIEF DESCRIPTION OF THE DRAWINGS

[FIG. 1] FIG. 1 shows a system construction that includes an on-vehicle device 1 and a mobile terminal device 50 according to an embodiment (a first embodiment).
[FIG. 2] FIG 2 is a flowchart showing an example of a primary processing that is realized by the system shown in FIG. 1.
[FIG. 3] FIG. 3 is a view illustrating an example of a remote control operation screen that is associated with a vibration condition of a vehicle, wherein (A) illustrates an example of the remote control operation screen during a low vibration condition.
[FIG. 4] FIG. 4 is a view illustrating a system construction that includes an on-vehicle device 1 and a mobile terminal device 50 according to another embodiment (a second embodiment).
[FIG. 5] FIG. 5 is a flowchart showing an example of a primary processing that is realized by the mobile terminal device 50' according to present embodiment.
[FIG. 6] FIG. 6 is a flowchart showing an example of a primary processing that is executed by the on-vehicle device 1 and the mobile terminal device 50 when a seat reclining device is operated.
[FIG. 7] FIG. 7(A) is a view illustrating an example of a remote control operation screen for operating the seat reclining device which is displayed on a display part 50a of the mobile terminal device 50 and FIG. 7(B) is a view of an example of a guidance screen displayed on a display 20.
[FIG. 8] FIG. 8 is a flowchart showing another example of the primary processing that is executed by the on-vehicle device 1 and the mobile terminal device 50 when the seat reclining device is operated.

### DETAILED DESCRIPTION OF EMBODIMENTS

Hereinafter, best modes for carrying out the present invention will be described with reference to the attached drawings.

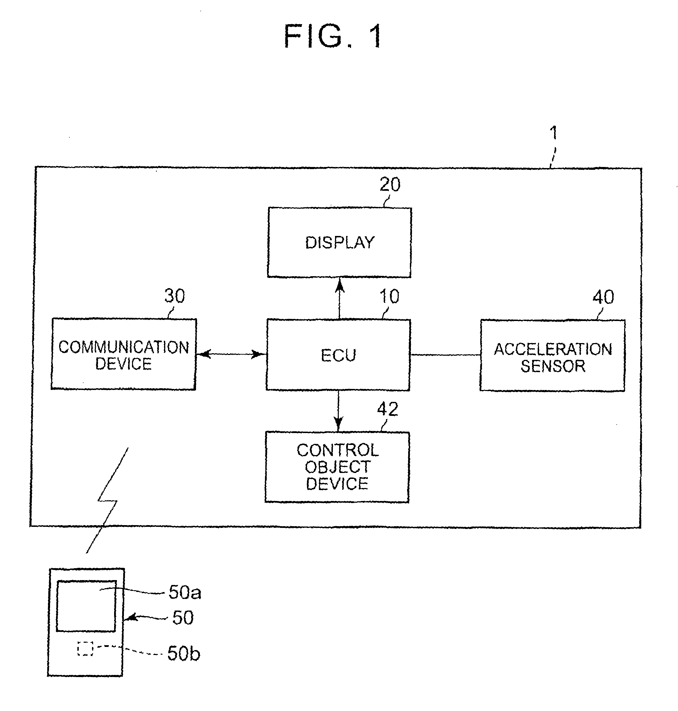

FIG. 1 shows a system construction that includes an on-vehicle device 1 and a mobile terminal device 50 according to an embodiment (a first embodiment).

The on-vehicle device 1 is mounted on a vehicle. The on-vehicle device 1 is formed with an ECU (electronic control device) 10 as a center. The ECU 10 is configured as a micro-computer which is made up of, for example, a CPU, a ROM, and a RAM which are mutually connected via buses that are not shown. In the ROM, various programs are stored which are to be executed by the CPU.

The ECU 10 is connected with a display 20. It is to be noted that the connection between the ECU 10 and the display 20 may be either hard-wired or wireless and may be in direct mode or indirect mode. In addition, some or all of the functions of the ECU 10 may be realized by an inner processing unit (not shown) of the display 20.

The display 20 may be in the form of any type such as a liquid crystal display device or a HUD (head up display device). In addition, the display 20 may be either a touch panel that is operable by touching or a display which is impossible to operate by touching. The display 20 is arranged at an appropriate portion in the vehicle compartment (under the center portion of an instrument panel, for example).

The display 20 may be allowed to display any information depending on the application software in use. For example, the display 20 may display map information of a navigation system, DVD playback information, images of a TV and an on-vehicle camera, and more.

The ECU 10 is connected with a communication device 30. The communication device 30 is in communication with the mobile terminal device 50 for exchanging a variety of information. It is to be noted that the communication mode is out of question and therefore, for example, "Bluetooth" (trademark registered) is available. In addition, the communication between the communication device 30 and the mobile terminal device 50 is not necessary to be established by wireless connection and may be established by hard-wired connection.

The ECU 10 is connected with an acceleration sensor 40 which detects a vibration of the vehicle. The acceleration sensor 40 may be a dedicated sensor but another sensor is available which is used, for example, in vehicle stabilization control or electronic control suspension. In addition, instead of the acceleration sensor 40, a gyro sensor may be used to detect a vibration of the vehicle.

The ECU 10 is connected with a control object device 42. As will be detailed later, the control object device 42 may be any on-vehicle electronic device (including a system) which the ECU 10 can control via the mobile terminal device 50. Examples of the control object device 42 may include an audio device, a TV set, a DVD playback device, a navigation device, an air conditioner, and a seat reclining device.

The mobile terminal device 50 may be a terminal device of the type which is capable of being carried in the vehicle by the user. In other words, the mobile terminal device 50 may be a terminal device which is movable together with the user who holds the terminal device. Otherwise, the mobile terminal device 50 may be a terminal device which is installed in the vehicle compartment.

The mobile terminal device 50 includes a display part 50a. The display part 50a is formed of a touch panel display. It is to be noted that regarding detection mode of the touch operation, any type is available such as electrostatic type or pressure sensitive type. The mobile terminal device 50 is in communication with the communication device 30 for exchanging a variety of information. The mobile terminal device 50 may be in the form of a cellular phone including a smart phone or a terminal device such as a tablet.

The mobile terminal device 50 includes a processing unit 50b. The processing unit 50b creates an operation screen (hereinafter, which is referred to as remote control operation screen) on the display part 50a. The processing unit 50b may be operated under any OS (such as iOS and Android) which is widely spread in smart phone technology and creates the remote control operation screen on the display part 50a on the basis of a pre-installed application software or an application software that is downloaded from the outside, which will be detailed later.

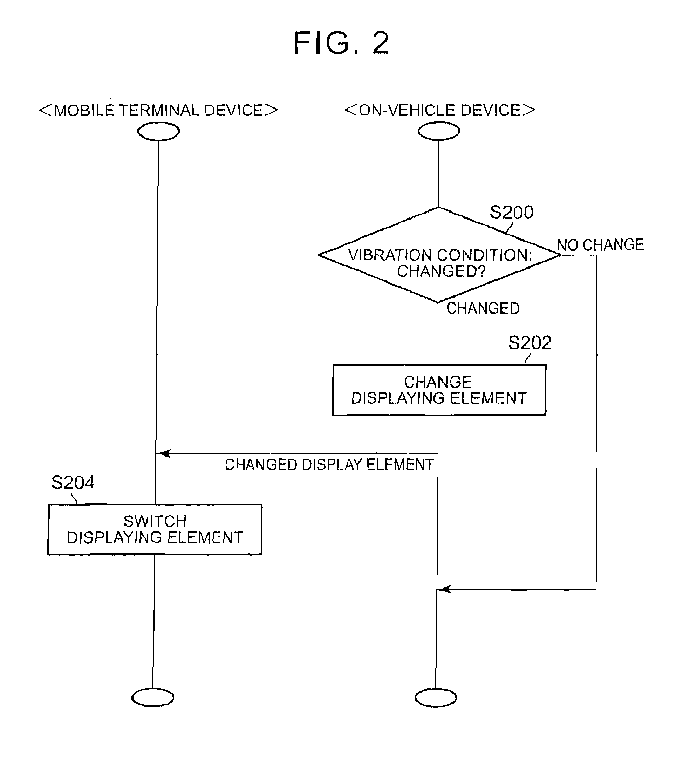

FIG. 2 is a flowchart showing an example of a primary processing that is realized by the system shown in FIG. 1. The present processing routine may be executed in a periodically repetitive manner while an ignition key of the vehicle is being turned on.

In step 200, the ECU 10 of the on-vehicle device 1 determines whether vibration condition of the vehicle is changed on the basis of an output of the acceleration sensor 40. For example, the vibration condition of the vehicle change may be a change between low and high vibration conditions. In such a case, if the output of the acceleration sensor 40 is less than a predetermined value, the low vibration condition may be determined, and if the output of the acceleration sensor 40 is not less than the predetermined value, the high vibration condition may be determined. The predetermined value may correspond to the minimum vibration level which may worsen the operability of the remote control operation (touching operation) at the display part 50a of the mobile terminal device 50 as will be detailed later or may be adapted, for example, through experiments. In addition, for the prevention of a chattering in the logic of change determination between the low vibration condition and the high vibration condition, a hysteresis may be set.

In the present step 200, if a change is determined in vibration condition of the vehicle, the control goes to step 202, while if a change is not determined in vibration condition of the vehicle, the control immediately terminates the processing.

In step 202, the ECU 10 of the on-vehicle device 1 changes a displaying element depending on the change in the vibration condition of the vehicle. Here, the displaying element is an essential configuration for creating the remote control operation screen on the display part 50a of the mobile terminal device 50 and may include, for example, software and data. Thus, changing the displaying element will change the remote control operation screen on the display part 50a of the mobile terminal device 50. For example, the displaying element may specify an operating button configuration including a position, size, color, or shape of each of the operating buttons on the remote control operation screen, a character provided on each of the operating buttons, or a response voice in response to a manipulation of each of the operating buttons. In addition, the displaying element may specify an information representation such as an operating signal which is to be generated when each of the operating buttons is manipulated. Displaying elements may be prepared for use in the low vibration condition and the high vibration condition, respectively. The displaying elements may be prepared for control object devices 42, respectively. These prepared displaying elements may be stored in, for example, a memory (such as a ROM) in the ECU 10. In addition, the displaying element may be obtained from the outside (such as an external server) by communicating therewith via the communication device 30 or via the other interface.

When the ECU 10 of the on-vehicle device 1 changes the displaying element in the present step 202, the ECU 10 transmits the resulting displaying element to the mobile terminal device 50 via the communication device 30.

In step 204, the processing unit 50b of the mobile terminal device 50 switches the displaying element on the basis of the transmitted displaying element from the on-vehicle device 1. In other words, the processing unit 50b, based on the transmitted displaying element from the on-vehicle device 1, switches the remote control operation screen on the display part 50a.

In this way, the processing shown in FIG. 2 makes it possible to switch the remote control operation screen on the display part 50a of the mobile terminal device 50 depending on the change of the vibration condition of the vehicle. Thereby, it is possible to make the remote control operation screen on the display part 50a of the mobile terminal device 50 suitable depending on the change of the vibration condition of the vehicle, resulting in improvement in operability.

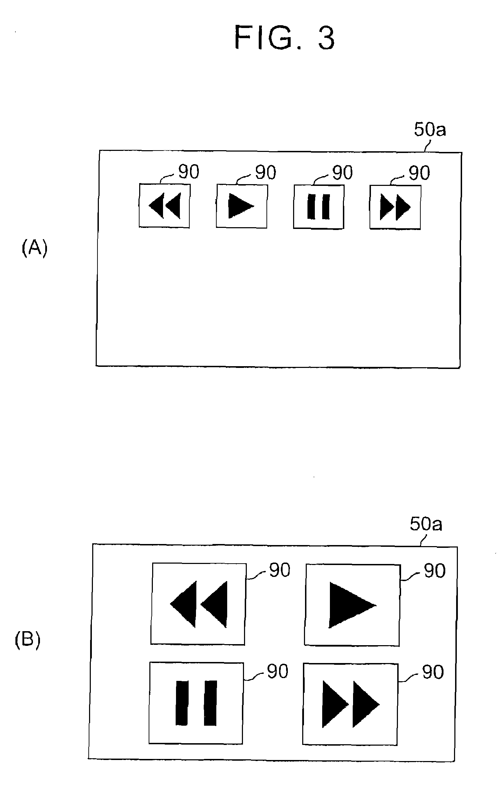

FIG. 3 is a view illustrating an example of a remote control operation screen that is associated with a vibration condition of a vesicle. Here, (A) illustrates an example of the remote control operation screen during the low vibration condition and (B) illustrates an example of the remote control operation screen during the high vibration condition. It is to be noted that in the examples shown in FIG. 3, the remote control operation screen on the display part 50a is a remote control operation screen when the control object device 42 is the DVD playback device. At this time, the display 20 may be allowed to display, for example, the condition of the DVD playback device.

The remote control operation screen under the low vibration condition, as shown in FIG. 3(A), includes four operating buttons 90 indicating REWIND, PLAYBACK, STOP (PAUSE), and FAST-FORWARDING. In the example shown in FIG. 3(A), the four operating buttons 90 are aligned laterally in line on the display part 50a of the mobile terminal device 50. On the remote control operation screen under the low vibration condition, an area other than the area for the operating buttons 90 is available for displaying other information. For example, in a case where the control object device 42 is the DVD playback device, in the area other than the area for the operating buttons 90 on the remote control operation screen under the low vibration condition, additional information such as a title name of the DVD under playback and a truck number under playback and condition information may be displayed.

The remote control operation screen under the high vibration condition, as shown in FIG. 3(B), includes four operating buttons 90 similar to the remote control operation screen under the low vibration condition. However, on the remote control operation screen under the high vibration condition, a size of each of the buttons 90 is set to be larger than a size of each of the buttons 90 on the remote control operation screen under the low vibration condition. Here, the size of the operating button corresponds to that of an operation area (reaction area) which is capable of receiving a touch operation onto the operating button 90 on the display part 50a.

Incidentally, in a case where the mobile terminal device 50 has been carried in the vehicle, vibrations generated in the vehicle may cause an erroneous operation. In detail, when an operator is going to select his/her desired operating button 90 by finger touching on the display part 50a of the mobile terminal device 50, a concurrently generated vibration of the vehicle may cause the touching position to shift from the desired position, resulting in an unexpected selection of one of the other operating buttons 90.

On the other hand, as shown in FIG. 3, in a case of the high vibration condition, the sizes of the operating buttons 90 on the remote control operation screen are enlarged as compared to the case under the low vibration condition, which makes it possible to prevent the erroneous operation due to the vibration of the vehicle, thereby increasing the operability.

It is to be noted that in the example shown in FIG. 3(B), in a case of the high vibration condition, the operating buttons 90 are provided on the area other than the area for the operating buttons 90 on the remote control operation screen in case of the low vibration condition. In other words, in a case of the high vibration condition, the display such as the additional information, the condition information, and other information disappears, which allows the entire screen of the display part 50a to be provided with the operating buttons 90. Thus, the operating buttons 90 can be enlarged to the maximum.

It is to be noted that in the example shown in FIG. 3, the number of the operating buttons 90 is four, however, the number of the operating buttons 90 per one remote control operation screen may be set as desired. In addition, the number of the operating buttons 90 in a case of the high vibration condition may be different from the number of the operating buttons 90 in a case of the low vibration condition. For example, when the number of the operating buttons 90 in a case of the high vibration condition is set to be smaller than the number of the operating buttons 90 in a case of the low vibration condition, the correspondingly remaining operating buttons 90 may be enlarged. In addition, an array mode of the operating buttons 90 may be arranged as desired. For example, in the examples shown in FIG. 3, the array mode of the operating buttons 90 in a case of the high vibration condition is different from the array mode of the operating buttons 90 in a case of the low vibration condition (in the example shown in FIG. 3(B), 2 X 2 arrangement), but may be identical with each other. In addition, the functions of the operating buttons 90 may be set as desired depending on the control object devices 42. For example, the operating buttons 90 may be entry (list) buttons which cause various operation screens of the audio device or the TV set to appear. In addition, the operating buttons 90 may be buttons (icon and launcher) for starting application programs. Further, the operating buttons 90 may be character input buttons in an operation screen such as the Japanese syllabary input screen.

In addition, in the examples shown in FIG. 3, for the prevention of the erroneous operation due to the vibration of the vehicle, the sizes of the operating buttons 90 on the remote control operation screen in a case of the high vibration condition are made larger than the sizes of the operating buttons 90 on the remote control operation screen in a case of the low vibration condition and otherwise any factor other than the size of the operating button 90 may be changed. In other words, it is possible to change either one of or a combination of any two or more of the size of the operating button 90, a size of character (or symbol) given on the operating button 90, a color or luminance of the operating button 90, and a response voice in response to a manipulation of the operating button 90. For example, a size the character (typically the character or the symbol indicating the function of the operating button 90) given on the button 90 in a case of the high vibration condition may be changed to be larger than that of the low vibration condition. In addition, the color or the luminance (contrast relative to the surroundings) of the operating button in a case of the high vibration condition may be changed to higher visibility color (for example, red) or a higher luminance than that in the low vibration condition. Further, the response voice in response to the manipulation of the operating button 90 in a case of the high vibration condition may be made louder than that in the low vibration condition. In such a design, it is possible to prevent the response noise to become difficult to be heard by a user regardless of vibration sound (noise) under the high vibration condition.

In the present embodiment, the acceleration sensor 40 (or the gyro sensor) is used for detecting the vibration condition of the vehicle that is running, but in a simpler embodiment, in light of the fact that the vibration increases if the vehicle is running, the acceleration sensor 40 (or the gyro sensor) may be replaced with a sensor that detects the vehicle running condition. For example, if the high vibration condition and the low vibration condition are determined based on a vehicle speed sensor while the vehicle is in running and the vehicle is at rest, respectively, it is possible to create respective remote control operation screens. Otherwise, in light of the fact that the vibration increases even if the vehicle is at rest, when the mobile terminal device 50 is located in the vehicle compartment, it is possible to determine the high vibration condition, which allows the sizes of the operating buttons 90 to increase. Whether the mobile terminal device 50 is located in the vehicle compartment may be determined at a side of the on-vehicle device 1 on the basis of a radio wave (communication) from the mobile terminal device 50.

In addition, the present embodiment determines the vibration condition in two levels: high vibration condition and low vibration condition, but the detection of the vibration condition may be achieved in three or more levels. In such a design, the size of the operating button 90 may be changed to get larger and larger in a stepwise fashion as the vibration condition gets higher and higher. This can be applied to the size of the character given on the operating button 90, the color of the operating button 90, and other factors.

In addition, in the present embodiment, the size of the operating button 90 is made variable after the detection of the vibration level, but when a vehicle running condition may be forecasted which involves in a higher vibration condition, it is possible to increase the size of the operating button 90 before such a vehicle running condition is realized. For example, it is possible to increase the size of the operating button 90 beforehand if the vehicle is forecasted to run on an unpaved road on the basis of information from the navigation system, if a shift lever is operated into a gear stage for off-road running, or if the vehicle's climbing over a level difference is forecasted on the basis of road surface information from a camera or the like. This can be applied to the size of the character given on the operating button 90, the color of the operating button 90, and the other factors.

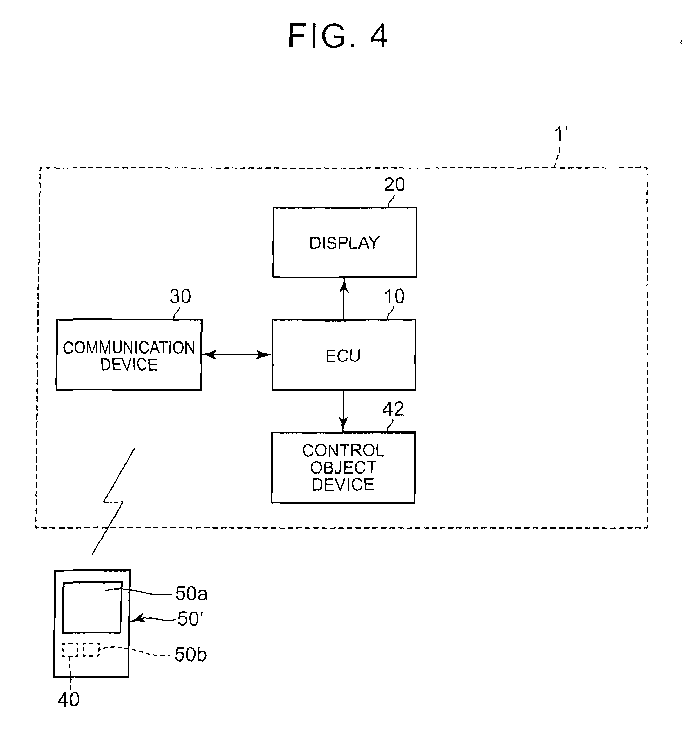

FIG 4 is a view illustrating a system construction that includes an on-vehicle device 1' and a mobile terminal device 50' according to another embodiment (a second embodiment). The second embodiment differs mainly from the aforementioned first embodiment in that the acceleration sensor 40 is provided at a side of the mobile terminal device 50'. The remaining part may be structured in the similar way.

The acceleration sensor 40 detects the vibration of the mobile terminal device 50'. Similarly, for the detection of the vibration of the mobile terminal device 50', a gyro sensor is available.

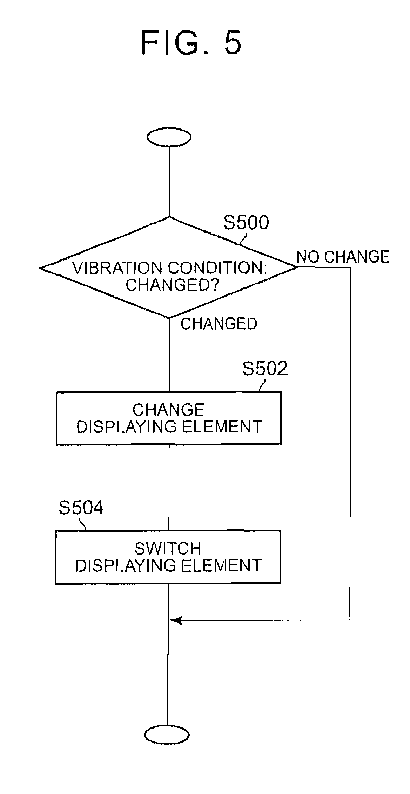

FIG. 5 is a flowchart showing an example of a primary processing that is realized by the mobile terminal device 50' according to the present embodiment. The present processing routine may be executed in a periodically repetitive manner while an ignition key of the vehicle is being turned on.

In step 500, the processing unit 50b of the mobile terminal device 50' determines whether a vibration condition of the mobile terminal device 50' is changed on the basis of an output of the acceleration sensor 40. For example, the vibration condition change of the mobile terminal device 50' may be a change between low and high vibration conditions. In such a case, if the output of the acceleration sensor 40 is less than a predetermined value, the low vibration condition may be determined, and if the output of the acceleration sensor 40 is not less than the predetermined value, the high vibration condition may be determined. The predetermined value may correspond to the minimum vibration level which may worsen the operability of the touching operation at the display part 50a of the mobile terminal device 50 or may be adapted, for example, through experiments. In addition, for the prevention of a chattering in the logic of change determination between the low vibration condition and the high vibration condition, a hysteresis may be set.

In the present step 500, if a change is determined in vibration condition of the mobile terminal device 50', the control goes to step 502, and if a change is not determined in vibration condition of the mobile terminal device 50', the control immediately terminates the routine.

In step 502, the processing unit 50b of the mobile terminal device 50' changes the displaying element depending on the change in the vibration condition of the mobile terminal device 50'. The explanation of the displaying element may be similar to that in the aforementioned first embodiment. Displaying elements may be prepared for use in the low vibration condition and the high vibration condition, respectively. The displaying elements may be prepared for control object devices 42, respectively. These prepared displaying elements may be stored in, for example, a memory (such as a ROM) in the mobile terminal device 50'. In addition, the displaying element may be obtained from the outside (such as an external server or an on-vehicle device 1) by communicating therewith or via the other interface. In addition, the changing mode of the displaying element (remote control operation screen) depending on the change of the vibration condition of the mobile terminal device 50' may be similar to that in the aforementioned first embodiment.

In step 504, the processing unit 50b of the mobile terminal device 50' switches the displaying element on the basis of the changed displaying element. In other words, the processing unit 50b, based on the changed displaying element, switches the remote control operation screen on the display part 50a.

In this way, the processing shown in FIG. 5 makes it possible to switch the remote control operation screen on the display part 50a of the mobile terminal device 50' depending on the change of the vibration condition of the mobile terminal device 50' as is the case in the aforementioned first embodiment. Thereby, it is possible to make the remote control operation screen on the display part 50a of the mobile terminal device 50' suitable (See FIG. 3) depending on the change of the vibration condition of the mobile terminal device 50', resulting in improvement in operability.

In the present embodiment, the acceleration sensor 40 (or the gyro sensor) is used for detecting the vibration condition of the mobile terminal device 50', but in a simpler embodiment, the acceleration sensor 40 (or the gyro sensor) may be replaced with a sensor that detects the moving condition of the mobile terminal device 50' in light of the fact that the vibration condition of the mobile terminal device 50' gets larger while the mobile terminal device 50' is in movement (for example, the user is in walking). For example, if the high vibration condition and the low vibration condition are determined based on the position (and its change) information from a GPS receiver built in the mobile terminal device 50' while the mobile terminal device 50' is in movement and the mobile terminal device 50' is at rest, respectively, it is possible to create respective remote control operation screens.

In addition, the present embodiment determines the vibration condition in two levels: high vibration condition and low vibration condition, but the detection of the vibration condition may be achieved in three or more levels. In such a design, the size of the operating button 90 may be changed to get larger in a stepwise fashion as the vibration condition gets higher. This can be applied to the size of the character given on the operating button 90, the color of the operating button 90, and other factors.

In addition, it is possible to provide an intermediate modification which lies between the aforementioned first embodiment and the second embodiment, wherein the information from the acceleration sensor 40 (or the gyro sensor) at the side of the mobile terminal device 50' is transmitted to the side of the on-vehicle device 1' in order to determines the vibration condition of the mobile terminal device 50' at the side of the on-vehicle device 1'. In such a design, depending on the determined vibration condition, it is possible to execute step 200 and its subsequent steps as shown in FIG. 2.

Next, an operative association mode between the on-vehicle device 1 and the mobile terminal device 50 will be described on the assumption that the control object device 42 is a seat reclining device. It is to be noted that the following explanation is made on the basis of the configuration of the aforementioned embodiment 1, but the similar operative association mode can be established on the basis of the configuration of the aforementioned embodiment 2.

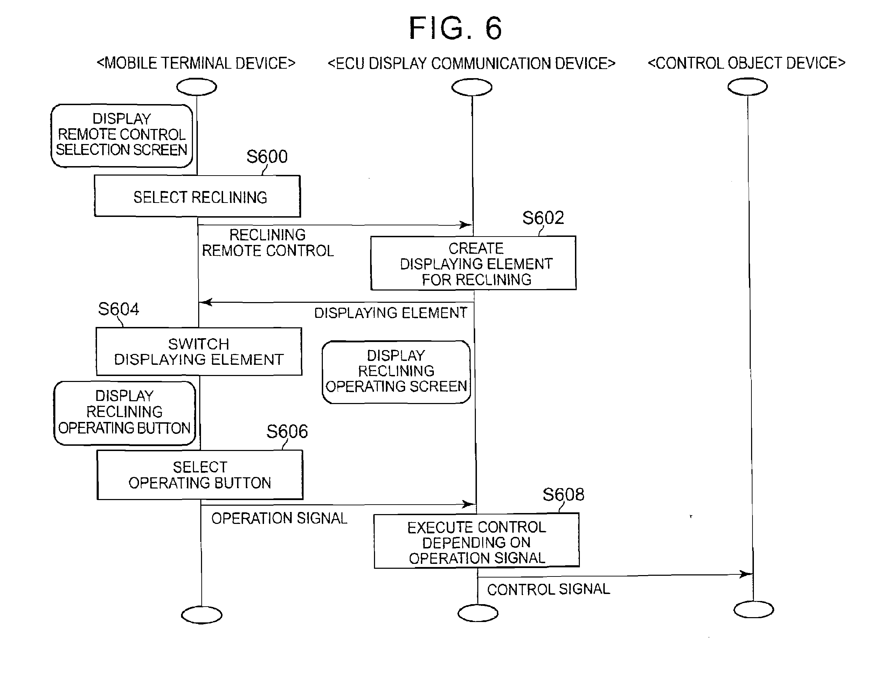

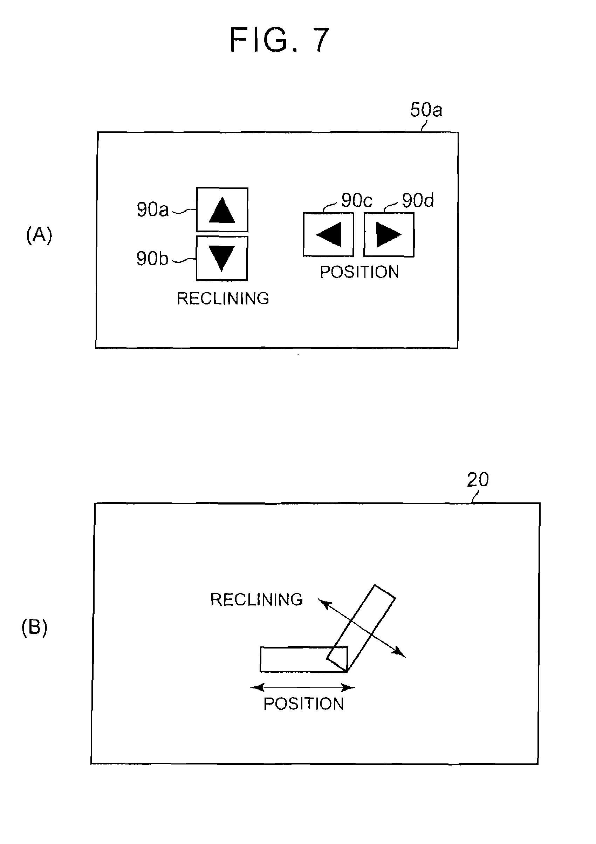

FIG. 6 is a flowchart showing an example of a primary processing that is executed by the on-vehicle device 1 and the mobile terminal device 50 for operating a seat reclining device. FIG. 7 illustrates (A) an example of a remote control operation screen for operating the seat reclining device which is displayed on the display part 50a of the mobile terminal device 50 and (B) an example of a guidance screen displayed on the display 20.

On the display part 50a of the mobile terminal device 50, a remote control selection screen is displayed. The remote control selection screen is for selecting a desired control object device 42 from the plural control object devices 42. It is to be noted that the remote control selection screen on the display part 50a is an example of the remote control operation screen. Thus, regarding various buttons (operating buttons corresponding to each of the control object devices 42) included in the remote control selection screen, the size and the other factors may be variable depending on the vibration condition as described above.

Here, a case is assumed in which the user selects a seat reclining device (step 600). When the user touches the operating button on the remote control selection screen on the display part 50a which is associated with the seat reclining device, the resulting information is transmitted and received, via the communication device 30 of the on-vehicle device 1, by the ECU 10. The ECU 10 creates, in response to this information, a displaying element for creating a remote control operation screen for operating the seat reclining device (displaying element for reclining) (step 602). At this time, the ECU 10 may create a displaying element depending on the vibration condition of the vehicle or the vibration condition of the mobile terminal device 50. The displaying element, as described above, may be variously prepared and stored in the memory. In such a case, ECU 10 only reads the displaying element for reclining from the memory. The ECU 10 of the on-vehicle device 1 transmits, via the communication device 30, thus created displaying element for reclining to the mobile terminal device 50. The processing unit 50b of the mobile terminal device 50 switches the displaying element on the basis of the displaying element for reclining that is transmitted from the on-vehicle device 1 (step 604). In other words, the processing unit 50b switches the remote control operation screen on the display part 50a on the basis of the displaying element for reclining that is transmitted from the on-vehicle device 1. Thereby, as shown in FIG. 7(A), the remote control operation screen is displayed for operating the seat reclining device on the display part 50a. It is to be noted that in the example shown in FIG. 7(A), the remote control operation screen for operating the seat reclining device includes operating buttons 90a, 90b for reclining (angle) adjustment and operating buttons 90c, 90d for adjusting the seat position in the front-rearward direction. In addition, as shown in FIG. 7(B), a remote control operation guidance screen on the display part 50a (reclining guidance screen) may be displayed on the display 20.

When the user selects a desired operating button from the operating buttons 90a to 90d on the remote control operation screen and manipulates the selected operating button (step 606), the corresponding operation signal is transmitted, via the communication device 30 of the on-vehicle device 1, to the ECU 10 for reception. The ECU 10 executes, in response to this, a control depending on the operation signal (step 608). In other words, the ECU 10 transmits a control signal to the seat reclining device as the control object device 42, and realizes a function that corresponds to the remote control operation executed by the mobile terminal device 50. For example, in a case of a single manipulation of the operating button 90a, the ECU 10 controls the seat reclining device to change the reclining angle by one step in the frontward inclination direction.

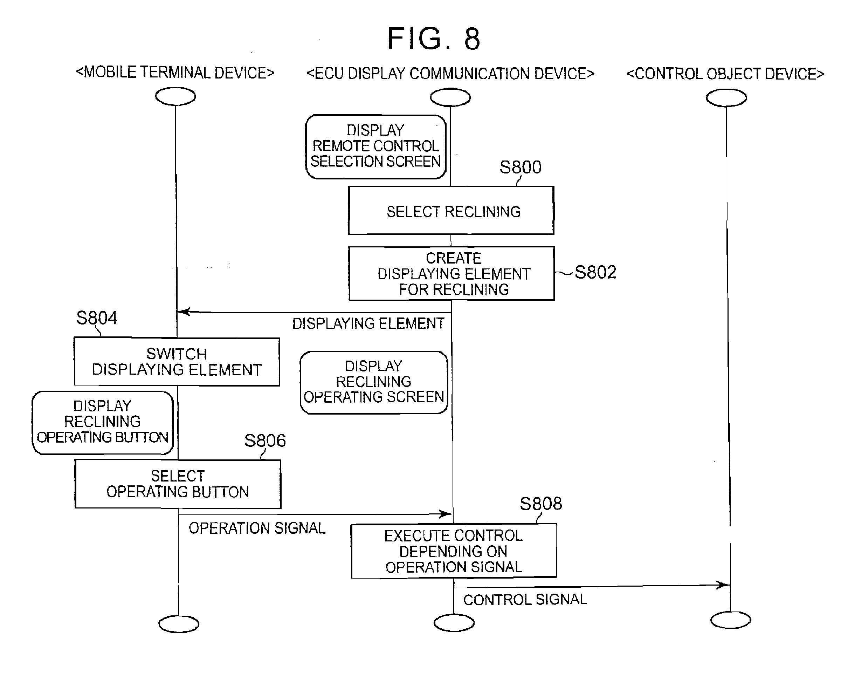

FIG 8 is a flowchart showing another example of the primary processing that is executed by the on-vehicle device 1 and the mobile terminal device 50 when operating the seat reclining device.

The example shown in FIG. 8 differs only from the example shown in FIG. 6 in that the subject of step 800 is the on-vehicle device 1. More specifically, on the display 20, the remote control selection screen is outputted. The remote control selection screen is for selecting a desired control object device 42 from the plural control object devices 42. Here, a case is assumed in which the user selects a seat reclining device (step 800). When the user touches, via an interface (for example, the display 20 as a touch panel display), the operating button on the remote control selection screen which is associated with the seat reclining device, the resulting information is received by the ECU 10. The ECU 10 creates, in response to this information, a displaying element for creating a remote control operation screen for operating the seat reclining device (displaying element for reclining) (step 802). Subsequent steps 804 to 808 may be substantially identical with steps 604 to 608 of the processing as shown in FIG. 6.

It is to be noted that in the examples shown in FIG. 6 and its subsequent figures, selecting the seat reclining device is assumed, but the user, of course, may select another control object device 42. In such a case, on the basis of the displaying element which corresponds to the other control object device 42, a remote control operation screen is created on the display part 50a. In such a way, at the side of the mobile terminal device 50, it is possible to output the remote control operation screen for each of the control object devices 42 on the basis of the displaying element supplied from the on-vehicle device 1, without having to have a function to create beforehand the remote control operation screen for each of the control object devices 42.

In the above, although the preferred embodiments of the present invention are detailed, the present invention is not limited thereto and therefore it is possible to add various modifications and replacements on the aforementioned embodiments without departing from the spirit and scope of the present invention.

For example, in the aforementioned embodiments, the operation screen of the mobile terminal device 50 (regarding the mobile terminal device 50', the same shall apply hereinafter) is for remote controlling the on-vehicle device 1, but this shall may be applied to the operation screen for controlling the mobile terminal device 50 per se. In other words, similarly, it is possible for the operating button on the operation screen for controlling the mobile terminal device 50 itself to change, for example, its size depending on the vibration condition of the mobile terminal device 50. For example, the operating button on the operation screen for controlling the mobile terminal device 50 itself may be changed to larger in case of the high vibration condition than that in case of the low vibration condition.

In addition, in the aforementioned embodiments, the mobile terminal device 50 has a function to remotely control the on-vehicle device 1, but it is possible to realize a configuration that controls remotely another external device other than the on-vehicle device 1. Examples of the other external device may include, for example, a household DVD device and a TV set. For example, in a case where the user makes a video recording reservation to the household DVD device during walking, the high vibration condition is determined, which makes it possible to increase the size of the operating button on the operation screen of the mobile terminal device 50. In addition, in such a case, the displaying element that creates the remote control operation screen corresponding to the other external device may be supplied from another external device.

In addition, in the aforementioned embodiments, the operating button 90 may be changed in position, shape, and language of character according to the destination country of the vehicle on which the on-vehicle device 1 (regarding the on-vehicle device 1', the same shall apply hereinafter) is implemented. Thereby, for example, suitable allocation of the operating button 90 may be realized according to the destination country. How to determine the destination country may be realized on the basis of destination country from the vehicle information or the like which the ECU 10 can obtain. Otherwise, the operating button 90 may be changed in, for example, position and shape according to the user. Thereby, for example, suitable allocation of the operating button 90 may be realized according to the user's taste. For example, it is possible to allow every user to change the position or the like of the operating button 90 to a different setting and to store the resulting setting for every user. It is to be noted that it is possible to realize who the user is on the basis of an image processing using an on-vehicle camera or ID information that can be obtained from the mobile terminal device 50.

In addition, in the aforementioned embodiments, in a case where the plurality of the remote control operation screens which correspond to plural pieces of application software are configured to be displayed in a selective manner, the remote control operation screen on the display part 50a of the mobile terminal device 50 may be determined depending on the running conditions of the vehicle on which the on-vehicle device 1 is implemented and the surrounding environments. The reason is that the plural pieces of the application software are different from each other in frequency of use depending on the vehicle running condition and the surrounding environment. The vehicle running condition and the surrounding environment may be judged on the basis of information from the navigation system and information from various kinds of on-vehicle sensors. For example, in light of the fact that the probability of a long-distance travelling of a vehicle is high when the vehicle is travelling on an expressway, an operation screen for HDD operation and a remote control operation screen for operating the DVD playback device may be displayed. In addition, when the TV receiving sensitivity is excellent (for example, in case of a capability receiving at least a specific station broadcast), a remote control operation screen for operating the TV set may be displayed.

In addition, in the aforementioned embodiments, in a case where the plurality of the remote control operation screens which correspond to plural pieces of application software are configured to be displayed in a selective manner, the remote control operation screen on the display part 50a of the mobile terminal device 50 may be determined on the basis of the learnt results of the behavior of the user. For example, in a case where a user is apt to have a massage when a continuous travelling of 30 minutes or above and the required time to reach the destination being 30 minutes or above are assumed, a remote control operation screen for seat massaging may be displayed if this condition is established.

In addition, in the aforementioned embodiments, the operating button 90 is in the form of a push button, but may be of another operation mode such as, a turning button operated by a finger action which is similar to an operation to the wheel of a mouse.

### DESCRIPTION OF REFERENCE NUMERALS AND SYMBOLS

1, 1'/ ON-VEHICLE DEVICE
10/ ECU
20/ DISPLAY
30/ COMMUNICATION DEVICE
40/ACCELERATION SENSOR
42/ CONTROL OBJECT DEVICE
50, 50'/ MOBILE TERMINAL DEVICE
50a/DISPLAY PART
50b/ PROCESSING UNIT
90 ((90a - 90b)/ OPERATING BUTTON

## Claims

1. A mobile terminal device comprising:
a main body; and
a touch panel which is formed on the main body and on which an operating button is provided,
the mobile terminal device being **characterized in that** when a specific condition which will cause the main body to vibrate is established, at least one of a size of the operating button on the touch panel, a size of character or symbol given on the operating button, a color or luminance of the operating button, and a response voice in response to a manipulation of the operating button is changed.

2. The mobile terminal device according to claim 1, wherein the size of the operating button on the touch panel is enlarged when the specific condition which will cause the main body to vibrate is established.

3. The mobile terminal device according to claims 1 or 2, wherein the specific condition which will cause the main body to vibrate includes a case in which the main body is detected to be in a vehicle compartment.

4. The mobile terminal device according to claims 1 or 2, wherein the specific condition which will cause the main body to vibrate includes a case in which the main body is detected to be in movement.

5. The mobile terminal device according to *any one* of *claims* 1 to 4, wherein the operating button is for operating external equipment.

6. The mobile terminal device according to any one of claims 1 to 5, wherein a function of the operating button can be changed by communicating with the outside.
